# EUROPEAN PATENT SPECIFICATION

(11) **EP 0 215 103 B1**
(45) Date of publication and mention of the grant of the patent: **11.01.1995**
(21) Application number: 86902147.7
(22) Date of filing: 10.03.1986
(51) Int. Cl.: C08G 73/02, C10M 133/52, C10M 133/56, C10M 159/12, C07C 211/00

(54) **HIGH MOLECULAR WEIGHT NITROGEN-CONTAINING CONDENSATES AND FUELS AND LUBRICANTS CONTAINING SAME**
HOCHMOLEKULAR STICKSTOFFHALTIGE KONDENSATE UND DIESE ENTHALTENDER TREIBSTOFF UND SCHMIERMITTEL
CONDENSATS ET CARBURANTS CONTENANT DE L'AZOTE DE POIDS MOLECULAIRE ELEVE ET LUBRIFIANTS LES CONTENANT

(30) Priority: 14.03.1985 US 711799
(43) Date of publication of application: 25.03.1987
(60) Divisional application: 94200497.9
(73) Proprietor: The Lubrizol Corporation, Wickliffe, Ohio 44092 (US)
(72) Inventor: STECKEL, Thomas, Frier, Chagrin Falls, OH 44022 (US)
(74) Representative: Crisp, David Norman
(86) International application number: US8600490
(87) International publication number: WO8605501

(56) References cited:
- US-A- 3 200 106
- US-A- 3 259 578
- US-A- 3 804 763
- US-A- 3 948 800

## Description

This invention relates to the preparation of high molecular weight extended polyamines which may be used in lubricant and fuel compositions. More specifically, this invention relates to extended polyamines which may be used as additives and dispersing aids for lubricants and fuel compositions, including dispersants that exhibit a high total base number and contain a low free amine content. The condensates of the present invention are produced by the acid catalyzed condensation of an amine reactant with a hydroxy alkyl or hydroxy aryl reactant.

Nitrogen containing dispersing aids for lubricants and fuel compositions are known and widely used in this technology. For example, in U.S. Patent Nos. 3,219,666 and 3,272,746 various nitrogen containing "ashless" type dispersing agents for lubricants and fuel compositions are disclosed.

In U.S. Patent No. 4,428,849 an alkenyl succinimide or borated alkenyl succinimide is reacted with an alkylene polyamine to produce a dispersant for lubricant oil useful for diesel engines.

U.S. Patent No. 4,234,435 discloses various carboxylic acid acylating agents which can be further reacted with such reactants as polyethylene polyamines and polyols to produce derivatives useful as lubricant additives or as intermediates for further post treatment which find other uses in the lubricant additive technology.

U.S. Patent No. 4,477,362 discloses various nitrogen- and oxygen-containing compositions which are prepared by reacting an aliphatic hydroxy compound with at least one tertiary amino alkanol to produce derivatives useful as lubricant and fuel additives.

U.S. Patent No. 4,200,545 describes various amino phenols which may be combined with a hydrocarbyl amine or acylated nitrogen containing compound which resultant compositions find use as additives for fuels and lubricants to be added to 2-cycle engines.

U.S. Patent No. 4,116,643 discloses amine salts of carboxylate half esters which are the reaction products of organic acid materials and hydroxy amines which materials find use as anti-rust additives for hydrocarbon fuels, such as gasoline and middle distillates.

U.S. Patent Nos. 3,804,763 and 3,948,800 describe oil soluble dispersants which are prepared by reacting: (A) at least one carboxylic acylating agent; with (B) a polyhydric aliphatic alcohol or aromatic alcohol; (C) a polyoxyalkylene polyamine; and (D) an alkylene amine.

None of the above-discussed patents disclose or suggest extended high molecular weight nitrogen-containing condensates prepared according to the present invention, i.e. by condensing a high molecular weight polyamine reactant with a hydroxy alkyl or hydroxy aryl reactant.

In accordance with the present invention, a process is provided to produce a high molecular weight extended polyamine which has a viscosity greater than the viscosity of the amine reactant. The viscosity of the polyamine condensate, produced according to the present invention, may range up to the production of solid material depending upon the reaction conditions and the desired properties of the final product.

Further, in accordance with the invention, it has been found that the extended polyamines are useful in the preparation of dispersants having substantially no free amine and improve the performance of lubricant and fuel compositions.

It has also been found that the extended polyamines may be used alone as dispersants and additives for lubricant and fuel compositions or may be further reacted with, for example, an acylating agent, to give an even higher molecular weight dispersant.

In accordance with the invention, a high yield, single step reaction comprising the dehydration condensation of at least one polyamine reactant with at least one hydroxy alkyl or hydroxy aryl reactant in the presence of an acid catalyst has been developed for the preparation of the high molecular extended polyamines.

Still further, in accordance with the invention, various lubricant compositions, fuel compositions and other such functional fluid compositions comprising the high molecular weight extended polyamines or the reaction products thereof according to the present invention are contemplated and within the scope of the invention.

These and other aspects of the invention will become clear to those skilled in the art upon the reading and understanding of the specification.

Thus, in one aspect of the invention provides a process for the preparation of an extended polyamine which comprises reacting, in the presence of an acid catalyst:
(A) a reactant represented by formula (II), (X), or (XI):

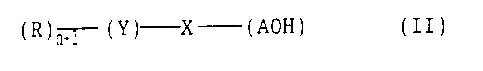

   HO―(R_{A}O)ₚ― R_{B}―OR_{C} (X)

   S_{f} (R_{f} OH)_{2f} (XI)

   wherein each R is hydrogen or hydrocarbyl; Y represents a nitrogen, oxygen or sulfur atom; X is an alkylene group further substituted by one or two AOH groups; A is hydrocarbylene; n is 1 when Y is nitrogen and n is 0 when Y is oxygen or sulfur; R_{A} and R_{B} are C₂₋₈ alkylene; R_{C} is aryl, C₁₋₇ alkyl or aralkyl; p is 0 to 150; f is 1 or 2; and R_{f} is C₁₋₁₀ alkylene, alkylene oxoalkylene having 1-10 C-atoms in each alkylene or arylene containing at least 6 C-atoms; and
(B) a reactant represented by formula (III), (IV), (VII) or (VIII):

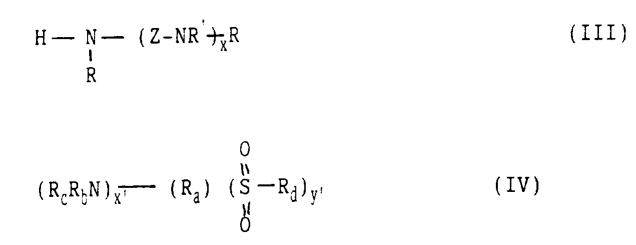

   NH₂ - Alkylene―(O-Alkylene)ₘ, - NH₂ (VII)

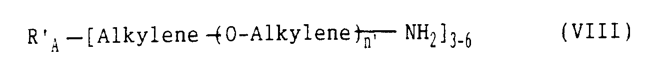

   wherein each R is hydrogen or hydrocarbyl; each R' is hydrogen, alkyl or NH₂R''(NHR'')_{y} wherein each R'' is an alkylene group having from 1 to 10 carbon atoms and y is a number in the range from 1 to 6; each Z is an alkylene group having from 1 to 10 carbon atoms, a heterocyclic nitrogen-containing cycloalkylene, or an oxyalkylene group having from 1 to 10 carbon atoms; and x is a number in the range from 1 to 10; said nitrogen-containing cycloalkylene, or an oxyalkylene group having from 1 to 10 carbon atoms; and x is a number in the range from 1 to 10; said reactant of formula (III) being free from acetylenic unsaturation; R_{d} is -NH₂, alkali or alkaline earth metal, Rₐ is a polyvalent organic radical having a valence equal to x' + y'; R_{b} and R_{c} are each independently hydrogen, or hydrocarbyl, with the proviso that at least one of R_{b} or R_{c} is hydrogen per aminosulfonic acid molecule; and x' and y' are each integers equal to or greater than one; m' is from 3 to 70; n' is from 1 to 40 with the proviso that the sum of all n's is from 3 to 70 and R'_{A} is a polyvalent saturated hydrocarbon radical of up to 10 carbon atoms having a valence of 3 to 6.

As used herein, the term "hydrocarbyl" denotes a radical having a carbon atom directly attached to the remainder of the molecule and having hydrocarbon character within the context of this invention. Such radicals include aliphatic, (e.g., alkyl or alkenyl), alicyclic (e.g., cycloalkyl or cycloalkenyl), aromatic, aliphatic- and alicyclic-substituted aromatic, aromatic-substituted aliphatic and alicyclic radicals, as well as cyclic radicals wherein the ring is completed through another portion of the molecule (that is, any two indicated substituents may together form an alicyclic radical). Such radicals are known to those skilled in the art.

Preferably, the hydrocarbyl radicals in the compounds of this invention are free from acetylenic and usually also from ethylenic unsaturation and have about at least one carbon atom. The radicals are usually hydrocarbon and especially lower hydrocarbon, the word "lower" denoting radicals containing up to seven carbon atoms. They are preferably lower alkyl or aryl radicals, most often alkyl.

The polyamine condensates in accordance with the present invention are prepared by the acid catalyzed condensation reaction of the reactant (A) with the amine reactant (B) at an elevated temperature.

The amine reactants, as represented by Formula (III) above, are characterized by the presence within their structure of the R-N group wherein R is described hereinabove and are lower molecular weight polyamines. Mixtures of two or more amines can be used in the reaction with one or more hydroxy alkyl or hydroxy aryl reactants which are within the scope of this invention. The amine reactants of the present invention may contain a heterocyclic nitrogen-containing cycloalkylene. If the amine contains such unsaturated sites, such unsaturation will not be acetylenic. Heterocyclic amines can contain more than one nitrogen hetero atom. The 5- and 6-membered heterocyclic rings are preferred.

Examples of suitable polyamine reactants for use according to the present invention include N-aminopropyl-cyclohexylamines, and 1,4-diaminocyclohexane.

Also suitable as amines (B) are the aminosulfonic acids and derivatives thereof corresponding to the general formula: 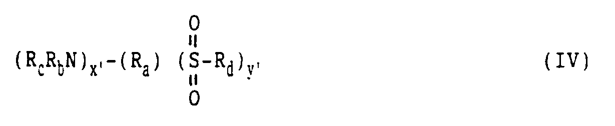
wherein R_{d} is -NH₂, alkali or alkaline earth metal, Rₐ is a polyvalent organic radical having a valence equal to x' + y'; R_{b} and R_{c} are each independently hydrogen, or hydrocarbyl, with the proviso that at least one of R_{b} or R_{c} is hydrogen per aminosulfonic acid molecule; and x' and y' are each integers equal to or greater than one. From the formula, it is apparent that each amino sulfonic reactant is characterized by at least one HN or H₂N- group and at least one 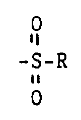
group. These sulfonic acids can be aliphatic, cycloaliphatic, or aromatic aminosulfonic acids and the corresponding functional derivatives of the sulfo group. Specifically, the aminosulfonic acids can be aromatic aminosulfonic acids, that is, where RₐY is a polyvalent aromatic radical such as phenylene where at least one 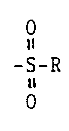
group is attached directly to a nuclear carbon atom of the aromatic radical. The aminosulfonic acid may also be a mono-amino aliphatic sulfonic acid; that is, an acid where x' is one and Rₐ is a polyvalent aliphatic radical such as ethylene, propylene, trimethylene, and 2-methylene propylene. Suitable amino-sulfonic acids and derivatives thereof useful as the amine reactant (B) are disclosed, e.g. in U.S. Patents 3,029,250; 3,367,864; and 3,926,820.

The high molecular weight hydrocarbyl polyamines, which can be used as (B) are generally prepared by reacting a chlorinated polyolefin having a molecular weight of at least 400 with ammonia or the appropriate amine. Such amines are known in the art and described, including their preparation, for example, in U.S. Patents 3,275,554, and 3,438,757.

Another group of amines suitable for use as amine reactant (B) are branched polyalkylene polyamines. The branched polyalkylene polyamines are polyalkylene polyamines wherein the branched group is a side chain containing on the average at least one nitrogen-bonded aminoalkylene group.

These reactants may be expressed by the formula: 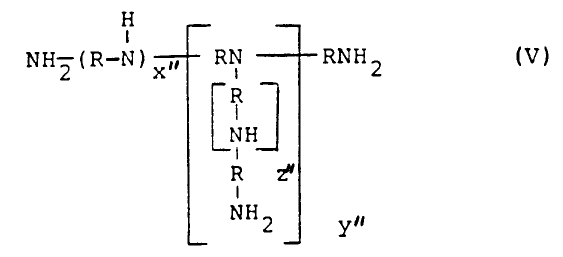
wherein R is an alkylene group having from 1 to 10 carbon atoms such as ethylene, propylene, butylene and other homologues (both straight chained and branched), etc., but preferably ethylene; and x'', y'' and z'' are integers, x'' being up to 8 but preferably 6 to 8, y'' being up to 8 but preferably 1 to 3, and z'' being for example 1 to 6 but preferably 1, the sum of x'' and y'' being not more than 9. The x'' and y'' units may be sequential, alternative, orderly or randomly distributed.

A preferred class of such polyamine reactants includes those of the formula 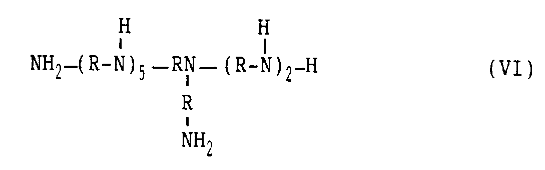
wherein R is preferably ethylene, but may be propylene, butylene, etc. (straight chained or branched).

U.S. Patents 3,200,106 and 3,259,578, for example, disclose the preparation of such polyamines.

Suitable amines also include polyoxyalkylene polyamines, e.g., polyoxyalkylene diamines and polyoxyalkylene triamines, having average molecular weights ranging from about 200 to 4000 and preferably from about 400 to 2000. Illustrative examples of these polyoxyalkylene polyamines may be characterized by the formula: 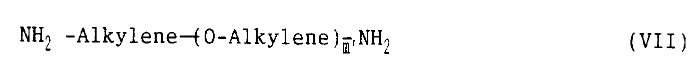
wherein m' has a value of 3 to 70 and preferably 10 to 35. 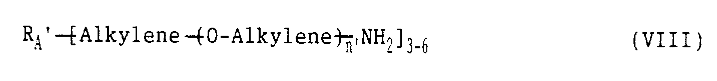
wherein n' is from 1 to 40 with the proviso that the sum of all of the n's is from 3 to 70 and generally from 6 to 35 and R'_{A} is a polyvalent saturated hydrocarbon radical of up to 10 carbon atoms having a valence of 3 to 6. The alkylene groups may be straight or branched chains and contain from 1 to 7 carbon atoms, and usually from 1 to 4 carbon atoms. The various alkylene groups present within Formulae VII and VIII may be the same or different.

The preferred polyoxyalkylene polyamine reactants useful for the purpose of this invention include the polyoxyethylene and polyoxypropylene diamines and the polyoxypropylene triamines having average molecular weights ranging from 200 to 2000. The polyoxyalkylene polyamines are commercially available and may be obtained, for example, from the Jefferson Chemical Company, Inc. under the trade name "Jeffamines D-230, D-400, D-1000, D-2000, T-403, etc.".

Examples of such polyoxyalkylene polyamine reactants are disclosed, e.g., in U.S. Patents 3,804,763 and 3,948,800.

Another preferred class of amine reactants for use in the present invention is alkylene polyamines, including the polyalkylene polyamines, which are described in more detail hereafter. The alkylene polyamines include those conforming to the formula 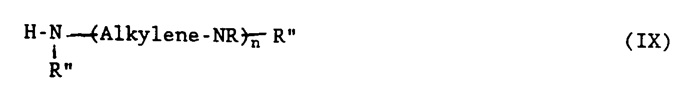
wherein n is from 1 to 10; each R is hydrogen, alkyl or NH₂R''' (NHR''')_{y} wherein each R''' is an alkylene group having from 1 to 10 carbon atoms and y is a number in the range from 1 to 6; each R'' is independently a hydrogen atom, or a hydrocarbyl group having up to 30 atoms, and the "Alkylene" group has from 1 to 10 carbon atoms, but the preferred alkylene is ethylene or propylene. Especially preferred are the alkylene polyamines where each R'' is hydrogen with the ethylene polyamines and mixtures of ethylene polyamines being the most preferred. Usually n will have an average value of from 2 to 7. Such alkylene polyamines include methylene polyamines, ethylene polyamines, butylene polyamines, propylene polyamines, pentylene polyamines, hexylene polyamines, heptylene polyamines, etc. The higher homologs of such amines and related aminoalkyl substituted piperazines are also included.

Alkylene polyamines useful in preparing the carboxylic derivative compositions include ethylene diamine, triethylene tetramine, propylene diamine, trimethylene diamine, hexamethylene diamine, decamethylene diamine, octamethylene diamine, di(heptamethylene)triamine, tripropylene tetramine, tetraethylene pentamine, trimethylene diamine, pentaethylene hexamine, di(trimethylene)triamine, N-(2-aminoethyl)piperazine, and 1,4-bis(2-aminoethyl)piperazine. Higher homologs, as are obtained by condensing two or more of the above-illustrated alkylene amines, are useful as reactant (B) as are mixtures of two or more of any of the afore-described polyamines.

Ethylene polyamines, such as those mentioned above, are especially useful for reasons of cost and effectiveness. Such polyamines are described in detail under the heading "Diamines and Higher Amines" in the Encyclopedia of Chemical Technology, Second Edition, Kirk and Othmer, Volume 7, pages 27-39, Interscience Publishers, Division of John Wiley and Sons, 1965. Such compounds are prepared most conveniently by the reaction of an alkylene chloride with ammonia or by reaction of an ethylene imine with a ring-opening reagent such as ammonia. These reactions result in the production of the somewhat complex mixtures of alkylene polyamines, including cyclic condensation products such as piperazines.

Other useful types of polyamine reactant mixtures are those resulting from stripping of the above described polyamine mixtures. In this instance, lower molecular weight polyamines and volatile contaminates are removed from an alkenyl polyamine mixture to leave as residue what is often termed "polyamine bottoms". In general, alkylene polyamine bottoms can be characterized as having less than two, usually less than 1% by weight material boiling below 200°C. In the instance of ethylene polyamine bottoms, which are readily available and found to be quite useful, the bottoms contain less than 2% by weight total diethylene (DETA) or triethylene tetramine (TETA). A typical sample of such ethylene polyamine bottoms obtained from the Dow Chemical Company of Freeport, Texas designated "E-100" showed a specific gravity of 15.6°C of 1.0168, a percent nitrogen by weight of 33.15 and a viscosity at 40o^{C} of 1.21x10⁻⁴ m²/s (121 centistokes). Gas chromatography analysis of such a sample showed it to contain about 0.93% "Light Ends" (DETA), 0.72% TETA, 21.74% tetraethylene pentamine and 76.61% pentaethylene hexamine and higher (by weight). These alkylene polyamine bottoms include cyclic condensation products such as piperazine and higher analogs of diethylene triamine, triethylene tetramine and the like.

The hydroxy containing reactant (A) is selected from numerous hydroxy containing compounds or species as represented by formulae (II), (X) and (XI) as defined above.

The reactants as represented by Formula (II) hereinabove are polyhydroxy materials which will condense with the above discussed amine reactants and more preferably will condense to very high molecular weight materials as opposed to forming cyclic products.

The hydroxy containing reactant of Formula (II) may be selected from aliphatic, cycloaliphatic, and aryl based radicals wherein the radical is preferably an alkyl based radical and most preferably a hydroxyethyl radical. A preferred class of alcohols suitable as reactant (A) are those polyhydric alcohols within the scope of Formula (II) containing up to 12 carbon atoms, and especially those containing 3 to 10 carbon atoms. This class of alcohols includes glycerol, erythritol, pentaerythritol, 1,2,3-hexanetriol, 1,2,4-hexanetriol, 1,2,5-hexanetriol, 2,3,4-hexanetriol, 1,2,3-butanetriol, 1,2,4-butanetriol. Aliphatic alcohols containing at least three hydroxyl groups are particularly preferred. Examples of amino alcohols within the scope of Formula (II) are the N-(hydroxy-lower alkyl)amines.

The monoethers of alkylene glycols and polyoxyalkylene glycols are also useful as reactants. These include the monoaryl ethers, monoalkyl ethers, and monoaralkyl ethers of these alkylene glycols and polyoxyalkylene glycols. This group of alcohols is represented by the general formula 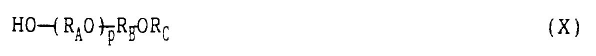
wherein R_{C} is aryl such as phenyl, lower alkoxy phenyl, or lower alkyl phenyl; lower alkyl such as ethyl, propyl, tert-butyl, pentyl, etc.,; and aralkyl such as benzyl, phenylethyl, phenylpropyl, p-ethylphenylethyl, etc.,; p is zero to 150, and R_{A} and R_{B} are lower alkylene of 2 to 8 carbon atoms and, preferably, 2 to 4 carbon atoms. Monoethers of polyoxyalkylene glycols where the alkylene groups are ethylene and p is at least two are considered very useful for the purposes of the present invention. Another useful compound is cellosolve.

Other hydroxy containing reactants useful in the present invention are hydroxyalkyl, hydroxy alkyl oxyalkyl and hydroxy aryl sulfides of the formula

S_{f}(R_{F}OH)_{2f} (XI)

wherein f is 1 or 2 and R_{F} is alkylene of 1 to 10 carbon atoms, alkylene oxyalkylene where alkylene is 1 to 10 carbon atoms and preferably 2 to 4 carbon atoms, or arylene of at least 6 carbon atoms. For the purposes of the present invention, 2,2'thiodiethanol and 2,2'-thiodipropanol are the preferred reactants for this class of hydroxy containing reactants.

As indicated previously, the reaction of the amine reactant with the hydroxy alkyl or hydroxy aryl reactant requires the presence of an acid catalyst. Those catalysts useful for the purpose of this invention include mineral acids (mono, di- and poly basic acids) such as sulfuric acid and phosphoric acid; organo phosphorous acids and organo sulfonic acids such as R*P(O) (OH)₂ and R*SO₃H, wherein R* is hydrocarbyl; alkali metal partial salts of H₃PO₄ and H₂SO₄, such as NaHSO₄, LiHSO₄, KHSO₄, NaH₂PO₄, LiH₂PO₄ and KH₂PO₄,; alkaline earth metal partial salts of H₃PO₄ and H₂SO₄, such as CaHPO₄, CaSO₄ and MgHPO₄; also Al₂O₃ and Zeolites. Phosphoric acid is preferred because of its commercial availability and ease of handling. Also useful as catalysts for this invention are materials which generate acids when treated in the reaction mixture, e.g., triphenylphosphite.

The reaction is run at an elevated temperature which, depending upon the particular reactants, can range from 60°C to 265°C. Most reactions, however, are run in the 220 to 250°C range. Furthermore, this reaction may be run at atmospheric pressure or optionally at a reduced pressure depending upon the particular reactants and the concomitant economics. The degree of condensation of the resultant high molecular weight polyamine prepared by the process of the present invention is limited only to the extent to prevent the formation of solid products under reaction conditions. The control of the degree of condensation of the product of the present invention is normally accomplished by limiting the amount of the condensing agent, i.e., the hydroxy alkyl or hydroxy aryl reactant charged to the reaction medium. In a preferred embodiment, the condensed high molecular weight polyamines of the present invention are pourable at room temperature and have viscosities which range from 100% greater than the viscosity of the amine reactant to 6000% greater than the viscosity of the amine reactant (B). In a most preferred embodiment, the viscosity of these polyamines will range from 5 x 10⁻⁵ m²/s (50 cSt) to 2 x 10⁻⁴ m²/s (200 cSt) at 100°C. It is pointed out that the foregoing limitation on the degree of condensation of the products of the present invention is solely for the purpose of the ultimate end use of these materials in lubricant compositions. For other related utilities, solid products of the condensation reaction described above may be desirable and thus the condensation may be carried out to result in high molecular weight solid products where this may be accomplished by adjusting the relative amounts of the respective reactants charged to the reaction medium.

The preparation of various high molecular weight polyamine condensates representative of products of the process of the present invention is illustated in the following examples. While these examples will show one skilled in the art how to operate within the scope of this inveniton, they are not to serve as a limitation on the scope of the invention. It is pointed out that in the following examples, and elsewhere in the present specification and claims, all percentages and all parts are intended to express percent by weight and parts by weight unless otherwise clearly indicated.

### EXAMPLE I

A 4-necked, 500 ml, round-bottom flask equipped with glass stirrer, thermowell, subsurface N₂ inlet, Dean-Stark trap, and Friedrich condenser was charged with
a) 201 grams of Tetraethylenepentamine (TEPA).
b) 151 grams of 40% aqueous Tris(hydroxymethyl)-aminomethane (THAM), and
c) 3.5 grams of 85% H₃PO₄.

The mixture was heated to 120°C over 1.0 hour. With N₂ sweeping, the mixture was heated to 130°C over 1 hour and to 230°C over 2 hours more. Held at 230-240°C for 4 hours and at 241-250°C for 3 hours. The product was cooled to 150°C and filtered with diatomaceous earth filter aid.

### EXAMPLE II

A 4-necked, 3-1, round-bottom flask was equipped with glass stirrer, thermowell, subsurface N₂ inlet, Dean-Stark trap, and Friedrich condenser was charged with:
a) 1299 grams of HPA Taft Amines (amine bottoms).
b) 727 grams of 40% aqueous Tris(hydroxymethyl)-aminomethane (THAM).

The mixture was heated to 60°C and 23 grams of 85% H₃PO₄ was added. The mixture was heated to 120°C over 0.6 hr. With N₂ sweeping, the mixture was heated to 150°C over 1.25 hr. and to 235°C over 1 hr. more. Held at 230-235°C for 5 hr. Heated to 240°C over 0.75 hr. and held at 240-245°C for 5 hr. The product was cooled to 150°C and filtered with a diatomaceous earth filter aid. Yield: 84% (1221 grams).

### EXAMPLE III

A 3-litre flask equipped with stirrer, thermowell, below surface N₂ inlet and a stripping condenser was charged with 363 grams of THAM and 1200 grams of TEPA. Next was added 16 grams of H₃ PO₄ at 110°C. N₂ blowing was commenced at 6.45 x 10⁻⁶ m³/s (0.25 cfh). The mixture was then heated to 220°C in 0.8 hour and held at 220-225°C for 1.2 hour; then heated to 230°C in 0.2 hour and held at 230°C for 4.75 hours: 129g distillate collected. The mixture stood and was held at 242-245°C for 5 hours: 39g of additional distillate was collected in trap. Held at 246-255°C for 1.2 hr: 178g material in trap; NNBbpb = 170 (neutralisation number employing bromphenol blue indicator). The mixture was filtered at 155°C using 45g of a diatomaceous earth filter aid.

### EXAMPLE IV

A 3-litre flask equipped with stirrer, thermowell, below surface N₂ inlet and a stripping condenser was charged with 363 grams of THAM and 1200 grams of TEPA. 16 grams of H₃PO₄ was added at 100°C. N₂ blowing was commenced at 5.16 x 10⁻⁶ m³/s (0.2 cfh). The mixture was heated to 165°C in 0.4 hour; and to 241°C in 0.6 hour. Held at 241-243°C for 0.3 hour. The contents were further heated to 250°C for an additional 0.5 hour and held at 250°C for 5.5 hour: 288g of material was collected in the trap; NNBbpb=506. This material was filtered at 150°C using 55g of diatomaceous earth filter aid.

### EXAMPLE V

A 1-litre flask equipped with stirrer, thermowell, below surface N₂ inlet and Dean-Stark trap was charged with 121 grams of THAM and 400 grams of TEPA. To this mixture was added 8.2 grams of KH₂PO₄ at 60°C. N₂ blowing was commenced at 3.87 x 10⁻⁶ m³/s (0.15 cfh). The reaction mixture was heated to 150°C over 1 hour to 230°C and over another 1.5 hours. The temperature was held at 230°C-232°C for 4.25 hour: 17g material collected in trap. The heated mixture was allowed to stand and was held at 237°C for 3.25 hour: 38g material collected in trap. The mixture was further heated to 241°C over 0.75 hour and held at 241°C-242°C for 4.75 hr.: 50g of material collected in trap. The material was allowed to stand and then held at 250°C for 5 hour: total of 53g material collected in trap: NNBbpb=96.5. Filtered at 150°C using 20g of diatomaceous earth filter aid.

### EXAMPLE VI

To a 500ml flask equipped with stirrer, thermowell, below surface N₂ inlet to Dean-Stark trap was charged with 201 grams of TEPA and 468 grams of glycerol. 2.3 grams H₃PO₄ were added at 80°C. N₂ blowing was commenced at 9.03 x 10⁻⁶ m³/s (0.35 cfh). The mixture was heated to 220°C over 2 hours; to 240°C in 1 hour; to 245°C in 1.5 hour and to 255°C in 1 hour. The temperature was held at 255-252°C for 2 hours: 12g material collected in trap. The mixture was allowed to stand and held at 255-262°C for 7 hours: 34g material collected in trap. The temperature of the mixture was further held at 255-260°C for 1 hour more. A total of 36g collected in trap: NNBbpb=435. Filtered at 130°C using 23g of diatomaceous earth filter aid.

### Highly Condensed Polyamines Further Reacted To Form Dispersant Materials

While the high molecular weight condensed polyamines prepared in accordance with the present invention are useful by themselves as lubricant and fuel additives and dispersants, they may be further reacted to form even higher molecular weight lubricant and fuel dispersant materials. In general, materials which may be used to further react with polyamine materials of the present invention are materials known to those skilled in the art and are described in numerous books, articles and patents. A number of these reference materials are noted hereinbelow in relation to specific types of dispersants.

### Carboxylic Acid Or Phenol Reactant Materials

Among the reactant materials that may be used for the purposes of the present invention to react with the above-described extended polyamines to form the higher molecular weight dispersant materials, there may be first mentioned carboxylic acids. The carboxylic acids from which suitable neutral and basic salts for use in this invention can be made include aliphatic, cycloaliphatic, and aromatic mono- and polybasic carboxylic acids such as the naphthenic acids, alkyl- or alkenyl-substituted cyclopentanoic acids, alkyl- or alkenyl-substituted cyclohexanoic acids, alkyl- or alkenyl-substituted aromatic carboxylic acids. The aliphatic acids generally contain at least eight carbon atoms and preferably at least twelve carbon atoms. Usually, they have no more than 400 carbon atoms. Generally, if the aliphatic carbon chain is branched, the acids are more oil-soluble for any given carbon atoms content. The cycloaliphatic and aliphatic carboxylic acids can be saturated or unsaturated. Specific examples include 2-ethylhexanoic acid, linolenic acid, propylene-tetramer-substituted maleic acid, behenic acid, isostearic acid, pelargonic acid, capric acid, palmitoleic acid, linoleic acid, lauric acid, oleic acid, ricinoleic acid, undecyclic acid, dioctylcyclopentane carboxylic acid, myristic acid, dilauryldecahydronaphthalene carboxylic acid, stearyloctahydoindene carboxylic acid, palmitic acid, commercially available mixtures of two or more carboxylic acids such as tall oil acids, and rosin acids.

A preferred group of oil-soluble carboxylic acids useful in preparing the salts used in the present invention are the oil-soluble aromatic carboxylic acids. These acids are represented by the general formula : 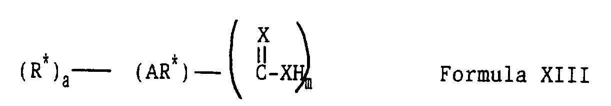
where R* is an aliphatic hydrocarbon-based group of at least four carbon atoms, and no more than 400 aliphatic carbon atoms, a is an integer of from one to four, Ar* is a polyvalent aromatic hydrocarbon nucleus of up to 14 carbon atoms, each X is independently a sulfur or oxygen atom, and m is an integer of from one to four with the proviso that R* and a are such that there is an average of at least 8 aliphatic carbon atoms provided by the R* groups for each acid molecule represented by Formula XIII. Examples of aromatic nuclei represented by the variable Ar* are the polyvalent aromatic radicals derived from benzene, naphthalene, anthracene, phenanthrene, indene, fluorene or biphenyl. Generally, the radical represented by Ar* will be a polyvalent nucleus derived from benzene or naphthalene such as phenylenes and naphthylene, e.g. methylphenylenes, ethoxyphenylenes, nitrophenylenes, isopropylphenylenes, hydroxyphenylenes, mercaptophenylenes, N,N-diethylaminophenylenes, chlorophenylenes, dipropoxynaphthylenes, triethylnaphthylenes, and similar tri-, tetra-, penta-valent nuclei thereof.

The R* groups are usually purely hydrocarbyl groups, preferably groups such as alkyl or alkenyl radicals. However the R* groups can contain small number substituents such as phenyl, cycloalkyl (e.g. cyclohexyl, cyclopentyl, etc.) and nonhydrocarbon groups such as nitro, amino, halo (eg.g., chloro, bromo, etc.), lower alkoxy, lower alkyl mercapto, oxo substituents (i.e., =0), thio groups (i.e., =S), interrupting groups such as -NH-, -O-, and -S- provided the essentially hydrocarbon character of the R* group is retained. The hydrocarbon character is retained for purposes of this invention so long as any non-carbon atoms present in the R* groups do not account for more than 10% of the total weight of the R* groups.

Examples of R* groups include butyl, isobutyl, pentyl, octyl, nonyl, dodecyl, docosyl, tetracontyl, 5-chlorohexyl, 4-ethyoxypentyl, 4-hexenyl, 3-cyclohexyl-octyl, 4-(p-chloro-phenyl)-octyl, 2,3,5-trimethylheptyl, 4-ethyl-5-methyloctyl, and substitutuents derived from polymerised olefins such as polychloroprenes, polyethylenes, polypropylenes, polyisobutylenes, ethylene-propylene copolymers, chlorinated olefin polymers, or oxidised ethylene-propylene copolymers. Likewise, the group Ar* may contain non-hydrocarbon substituents, for example, such diverse substituents as lower alkoxy, lower alkyl mercapto, nitro, halo, alkyl or alkenyl groups of less than four carbon atoms, hydroxy, or mercapto.

A group of particularly useful carboxylic acids are those of the formulae: 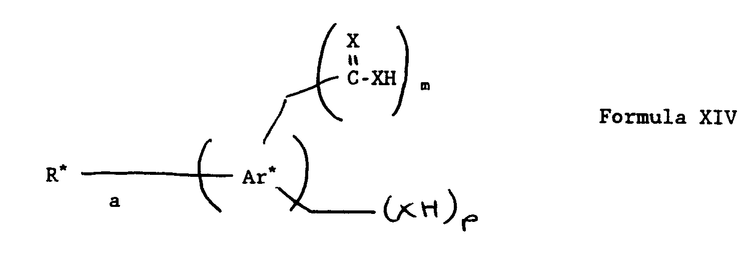
where R*, X, Ar*, m and a are as defined in Formula XIII and p is an integer of 1 to 4, usually 1 or 2. Within this group, an especially preferred class of oil-soluble carboxylic acids are those of the formulae: 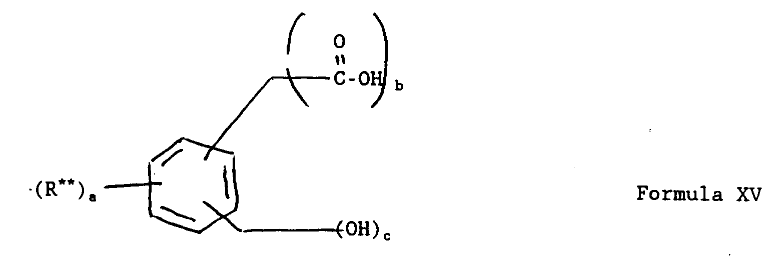
where R** in Formula A is an aliphatic hydrocarbon group containing at least 4 to 400 carbon atoms, a is an integer of from 1 to 3, b is 1 or 2, c is zero, 1, or 2 and preferably 1 with the proviso that R** and a are such that the acid molecules contain at least an average of twelve aliphatic carbon atoms in the aliphatic hydrocarbon substituents per acid molecule. And within this latter group of oil-soluble carboxylic acids, the aliphatic-hydrocarbon substituted salicylic acids wherein each aliphatic-hydrocarbon substituent contains an average of at least sixteen carbon atoms per substituent and one to three substituents per molecule are particularly useful. Salts prepared from such salicylic acids wherein the aliphatic hydrocarbon substituents are derived from polymerised olefins, particularly polymerised lower 1-mono-olefins such as polyethylene, polypropylene, polyisobutylene, ethylene/propylene copolymers and the like and having average carbon contents of 30 to 400 carbon atoms.

The carboxylic acids corresponding to Formula XIII-XV above are well known or can be prepared according to procedures known in the art. Carboxylic acids of the type illustrated by the above formula and processes for preparing their neutral and basic metal salts are well known and disclosed, for example, in such U.S. Patents as 2,197,832; 2,197,835; 2,252,662; 2,252,664; 2,174,092; 3,410,798 and 3,595,791.

Another type of neutral and basic carboxylate salt used in this invention are those from alkenyl succinates of the general formula: 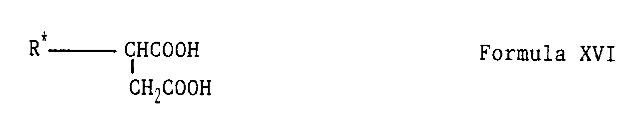
wherein R* is as defined above In Formula XIII. Such salts and means for making them are set forth in U.S. Patents 3,271,130; 3,567,637 and 3,632,510.

Other patents specifically describing techniques for making basic salts of the hereinabove-described sulfonic acids, carboxylic acids, and mixtures of any two or more of these include U.S. Patent Nos. 2,501,731; 2,616,904; 2,616,905, 2,616,906; 2,616,911; 2,616,924; 2,616,925; 2,617,049; 2,777,874; 3,027,325; 3,256,186; 3,282,835; 3,384,585; 3,373,108; 3,365,396; 3,342,733; 3,320,162; 3,312,618; 3,318,809; 3,471,403; 3,488,284; 3,595,790 and 3,629,109.

Neutral and basic salts of phenols (generally known as phenates) are also useful in the compositions of this invention and well known to those skilled in the art. The phenols from which these phenates are formed are of the general formula: 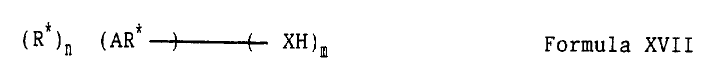
wherein R*, n, Ar*, X and m have the same meaning and preferences as described hereinabove with reference to Formula VIII. The same examples described with respect to Formula VIII also apply.

A commonly available class of phenates are those made from phenols of the general formula: 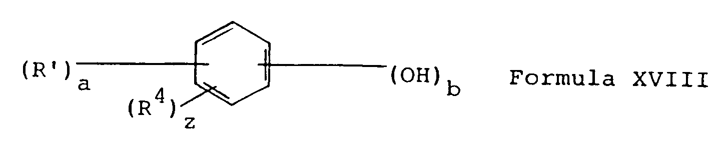
wherein a is an integer of 1-3, b is of 1 or 2, z is 0 or 1, R' in Formula XIII is a substantially saturated hydrocarbon-based substituent having an average of from 30 to 400 aliphatic carbon atoms and R⁴ is selected from the group consisting of lower alkyl, lower alkoxyl, nitro and halo groups.

One particular class of phenates for use in this invention are the basic (i.e., overbased) Group IIA metal sulfurised phenates made by sulfurising a phenol as described hereinabove with a sulfurising agent such as sulfur, a sulfur halide, or sulfide or hydrosulfide salt. Techniques for making these sulfurised phenates are described in U.S. Patents 2,680,096, 3,036,971 and 3,775,321.

Other phenates that are useful are those that are made from phenols that have been linked through alkylene (e.g. methylene) bridges. These are made by reacting single or multi-ring phenols with aldehydes or ketones, typically, in the presence of an acid or basic catalyst. Such linked phenates as well as sulfurised phenates are described in detail in U.S. Patent 3,350,038; particularly columns 6-8 thereof.

Naturally, mixtures of two or more neutral and basic salts of the hereinabove described carboxylic acids and phenols can be used in the compositions of this invention, including mixtures of two or more of any of these.

The above-described reaction products form additive/dispersant materials of the general formula:

[(QTₜ)ᵥJⱼ] Formula XIX

A basic dispersant for a lubricant or fuel composition, having substantially no free amine, of the formula:

(QTₜ)ᵥJⱼ

wherein Q is a radical of a molecule selected from hydrocarbyl-substituted carboxylic acids, or hydrocarbyl phenols wherein the hydrocarbyl substituents may themselves be substituted by nitro, amino, halo, C₁₋₇ alkoxy, C₁₋₇ alkyl mercapto, oxo, thio, or -NH, -O- or -S-interrupting groups such that any non-carbon atoms do not account for more than 10% of the total weight of the hydrocarbyl substituent; T is acyl, acyloxy, oxyalkylene, arylene or imidoyl; J is a condensed polyamine radical derived from an extended polyamine prepared in accordance with a process of the present invention; and t, v and j each represent a whole integer of at least 1.

Conveniently, Q is derived from a polyalkylene-substituted succinic acid or derivative thereof wherein said polyalkylene substituent is characterised by a Mn value of 150 to 5,000 and a Mw/Mn value of 1.5 to 4.0. Preferably, the additive/dispersant is characterised in that the additive/dispersant is derived from:
I. at least one reactant selected from
   A. hydrocarbyl-substituted carboxylic acids or derivatives thereof containing at least 34 carbon atoms, or
   B. alkylphenols in which the alkyl group contains at least 30 carbon atoms; with
II. at least one extended polyamine reactant prepared according to the process of the invention. Desirably, in the additive/dispersant reactant I is at least one substituted succinic acid or derivative thereof consisting of substituent groups and succinic groups wherein the substituent groups are derived from polyalkylene, said polyalkylene being characterised by a Mn value of 1300 to 5000 and a Mw/Mn value of 1.5 to 4.0; and said extended polyamine reactant II is derived from the - reaction of (A) glycerol, trimethylolpropane, trimethylolethane or tris(hydroxymethyl) aminomethane, and (B) triethylenetetramine, diethylenetriamine, tetraethylene pentamine, pentaethylenehexamine and mixtures thereof.

Preferably the additive dispersant exhibits a total base number of from 55 to 83.

The foregoing dispersants are generally prepared in the same manner as the high molecular weight extended polyamines. In other words, they are prepared by the acid catalysed condensation reaction of at least one of the high molecular weight extended polyamines with at least one of the reactive materials described hereinabove at an elevated temperature. The catalysts previously described herein are also useful in this reaction.

The following examples are provided to illustrate various dispersants prepared or derived from reaction of the extended polyamine materials with such reactant materials as described above. Again, it is emphasised that these examples are provided for illustrative purposes only and are not to serve as a limitation on the scope of the invention.

### Example A

A 12-l, 4-necked, round-bottom flask equipped with stirrer, thermowell, subsurface N₂ inlet, Dean-Stark trap and Friedrich condenser was charged with (a) 460 g. TEPA/THAM(5N.1.50H) H₃PO₄ cat, extended polyamine, and (b) 2500 g. 2C Dil oil. The mixture was heated to 105°C and 3360 g. of a poly(isobutene) (molecular weight 1000)-substituted succinic anhydride having a saponification number of 100 was added through a funnel over 1.5 hour. N₂ blowing was commenced slowly. The mixture was heated to 160°C and held for 5.0 hours. The mixture was filtered at 150°C with diatomaceous earth filter aid to give the final product. Yield: 96% (5991 g), 40% 2C Dil oil. Analysis: %N = 2.31/3=2.42; Free Amine = Nil; TBN(776) = 49.1 (Total Base Number).

### Example B

A 12-l, 4-necked, round-bottom flask equipped with stirrer, thermowell, subsurface N₂ inlet, Dean-Stark trap and Friedrich condenser was charged with (a) 605 grams HPA Taft Amines/THAM(5N:1.20H) H₃PO₄ cat, extended polyamine, and (b) 3262 grams 2c dil oil. The mixture was heated to 110°C and 4300 grams of a poly(isobutene) (molecular weight 1000)- substituted succinic anhydride having a saponification number of 100 was added through a funnel over 0.7 hour. N₂ blowing was commenced slowly. The mixture was heated to 160°C over 1 hour and held at 160-162°C for 5 hours.

The mixture was filtered at 150°C with diatomaceous earth filter aid to give the final product. Yield: 96% (8155g), 40% 2c dil oil. Analysis: %N = 2.28/2.19; TBN(776) = 46.5; TAN(744) = 7.7 (Total Acid Number).

### Example C

A 1-liter flask equipped with stirrer, thermowell and reflux condenser was charged with 39g of the reaction product of Example IV and 75g MeOH. This mixture was heated and stirred to obtain a clear solution at 40°C. To the mixture 2c dil oil was added at 40°C. A solution of 218g of a poly(isobutene) (molecular weight 1000)- substituted succinic anhydride having a saponifaction number of 100 in 110g MePh was added over 0.8 hour at 62-50°C. This mixture was held at 50-65°C for 1 hour. This mixture was stripped to 110°C in 1.5 hour; to 120°C in 1 hour; to 160°C in 0.8 hour more. N₂ blowing was commenced slowly at 3.87x10⁻⁶ m³/s (0.15 cfh) and held at 160°C for 6.0 hours and then filtered at 150° using 25g of diatomaceous earth filter aid.

### Example D

To a 1-liter flask equipped with stirrer, thermowell, below surface N₂ inlet and Dean-Stark trap was charged 64.6g of the product of Example I and 168 grams of a diluent oil. To this mixture was added 110g of a poly(propylene) (molecular weight 168)- substituted succinic anhydride having a saponification number of 420 over 0.1 hour at 110°C-135°C (exo). N₂ blowing was commenced slowly at 3.87x10⁻⁶m³/s (0.15 cfh). The mixture was held at 130°C-130°C for 0.2 hour. The mixture was heated to 165°C over 0.8 hour and held at 165°C for 4.5 hour. The mixture was allowed to stand. 56g of ucon LB625 was added. The mixture was filtered at 145°C using 25g of diatomaceous earth filter aid.

### Example E

A 1-liter flask equipped with stirrer, thermowell, powder funnel and Dean-Stark trap was charged with 44.3g of the product of Example VI and 2c dil oil. To this mixture 336g of a poly(isobutene) (molecular weight 1000) substituted succinic anhydride having a saponification number of 100 was added over 0.7 hour at 105°C. N₂ blowing was commenced slowly at 9.03x10⁻⁶m³/s(0.35 cfh). This mixture was heated to 160°C over 1 hour, held at 160°C-162°C for 5.5 hours. This mixture was filtered at 150°C using 30g diatomaceous earth filter aid.

### Example F

A 1-liter flask equipped with stirrer, thermowell, reflux condenser was charged with 224 grams of a poly(isobutene) (molecular weight 1000)- substituted phenol. To the mixture was added 13.2 g. CH₂Oₓ, n-BuOH and 1.6 g. NaOH solution at 72°C for 5 hr. (a clear solution was observed after 4.5 hr.). To the mixture was added 25 g. HCl solution to give a neutral solution to bpb in CIR solvent. To this mixture was added 13.9 grams 1074-27181 over 0.1 hour. The mixture was heated to 110°C over 1.2 hr. (began removing distillate). The mixture was heated to 120°C in 0.4 hr. and to 158°C in 0.6 hr more. The mixture was held at 158-160°C for 0.8 hr. The mixture was allowed to stand and held at 160°C for 5 hr. The mixture was stripped to 160°C in 30mm. The mixture was filtered at 150°C using 22g DD 1600. Filtered material is produced.

The foregoing examples illustrate high TBN (45-50) dispersants, which surprisingly exhibit a low free amine content of less than .1 and prepared using the high molecular weight extended polyamines, show better engine test performance than products prepared from more conventional amines, e.g., amine bottoms, tetraethylene amines, and the like. Furthermore, these products give more thermally stable dispersants exhibiting a TBN as high as 77, 40% dilution. However, low TBN (e.g. less than 10) dispersants, which exhibit improved performance, may also be prepared according to the present invention.

The above compositions of the invention can be employed in a variety of lubricants based on diverse oils of lubricating viscosity, including natural and synthetic lubricating oils and mixtures thereof. These lubricants include crankcase lubricating oils for spark-ignited and compression-ignited internal combustion engines, including automobile and truck engines, two-cycle engines, aviation piston engines, marine and railroad diesel engines, and the like. They can also be used in gas engines, stationary power engines and turbines and the like. Automatic transmission fluids, transaxle lubricants, gear lubricants, metal-working lubricants, hydraulic fluids and other lubricating oil and grease compositions can also benefit from the incorporation therein of the compositions of the invention.

Natural oils include animal oils and vegetable oils (e.g., castor, lard oil) liquid petroleum oils and hydro-refined, solvent-treated or acid-treated mineral lubricating oils of the paraffinic, naphthenic and mixed paraffinic-naphthenic types. Oils of lubricating viscosity derived from coal or shale are also useful base oils.

Synthetic lubricating oils include hydrocarbon oils and halo-substituted hydrocarbon oils such as polymerized and interpolymerized olefins [e.g., polybutylenes, polypropylenes, polypropylene-isobutylene copolymers, chlorinated polybutylenes, poly(1-hexenes), poly(1-octenes), poly(1-decenes)]; alkylbenzenes (e.g., dodecylbenzenes, tetra-decylbenzenes, dinonylbenzenes, di(2-ethylhexyl)benzenes); polyphenyls (e.g., biphenyls, terphenyls, alkylated polyphenols); and alkylated diphenyl ethers and alkylated diphenyl sulfides and the derivatives, analogs and homologs thereof.

Alkylene oxide polymers and interpolymers and derivatives thereof where the terminal hydroxyl groups have been modified by esterification, etherifications, etc., constitute another class of known synthetic lubricating oils. These are exemplified by polyoxyalkylene polymers prepared by polymerization of ethylene oxide or propylene oxide, the alkyl and aryl ethers of polyoxyalkylene polymers (e.g., methylpolyisopropylene glycol ether having an average molecular weight of 1000, diphenyl ether of polyethylene glycol having a molecular weight of 500-1000, diethyl ether of polypropylene glycol having a molecular weight of 1000-1500); and mono- and polycarboxylic esters thereof, for example, the acetic acid esters, mixed C₃-C₈ fatty acid esters and C₁₃ Oxo acid diester of tetraethylene glycol.

Another suitable class of synthetic lubricating oils comprises the esters of dicarboxylic acids (e.g., phthalic acid, succinic acid, alkyl succinic acids and alkenyl succinic acids, maleic acid, azelaic acid, suberic acid, sebacic acid, fumaric acid, adipic acid, linoleic acid dimer, malonic acid, alkylmalonic acid, alkenyl malonic acids) with a variety of alcohols (e.g., butyl alcohol, hexyl alcohol, dodecyl alcohol, 2-ethylhexyl alcohol, ethylene glycol, diethylene glycol monoether, propylene glycol). Specific examples of these esters include dibutyl adipate, di(2-ethylhexyl) sebacate, di-n-hexyl fumarate, dioctyl sebacate, diisooctyl azelate, diisodecyl sebacate, the 2-ethylhexyl diester of linoleic acid dimer, and the complex ester of linoleic acid dimer, and the complex ester formed by reacting one mole of sebacic acid with two moles of tetraethylene glycol and two moles of 2-ethylhexanoic acid.

Esters useful as synthetic oils also include those made from C₅ to C₁₂ monocarboxylic acids and polyols and polyol ethers such as neopentyl glycol, trimethylolpropane, pentaerythritol, dipentaerythritol and tripentaerythritol.

Silicon-based oils such as the polyalkyl-, polyaryl-, polyalkoxy, or polyaryloxysiloxane oils and silicate oils comprise another useful class of synthetic lubricants; they include tetraethyl silicate, tetraisopropyl silicate, tetra-(2-ethylhexyl) silicate, tetra-(4-methyl-2-ethyl-hexyl) silicate, tetra-(p-tertbutylphenyl) silicate, hexa-(4-methyl-2-pentoxy)-disiloxane, poly(methyl)-siloxanes and poly(methylphenyl) siloxanes. Other synthetic lubricating oils include liquid esters of phosphorous-containing acids (e.g., tricresyl phosphate, trioctyl phosphate, diethyl ester of decylphosphonic acid) and polymeric tetrahydrofurans.

Unrefined, refined and rerefined oils can be used in the lubricants of the present invention. Unrefined oils are those obtained directly from a natural or synthetic source without further purification treatment. For example, a shale oil obtained directly from retorting operations, a petroleum oil obtained directly from distillation or ester oil obtained directly from an esterification process and used without further treatment would be an unrefined oil. Refined oils are similar to the unrefined oils except they have been further treated in one or more purification steps to improve one or more properties. Many such purification techniques, such as distillation, solvent extraction, acid or base extraction, filtration and percolation are known to those skilled in the art. Rerefined oils are obtained by processes similar to those used to obtain refined oils applied to refined oils which have been already used in service. Such rerefined oils are also known as reclaimed or reprocessed oils and often are additionally processed by techniques for removal of spent additives and oil breakdown products.

Generally the lubricants of the present invention contain a lubricating improving amount of one or more of the compositions of this invention, e.g., sufficient to provide it with improved detergent/dispersant and/or V.I. properties. Normally the amount employed will be 0.05% to 20%, preferably 0.1% to 10% of the total weight of the lubricating composition. This amount is exclusive of solvent/diluent medium. In lubricating compositions operated under extremely adverse conditions, such as lubricating compositions for marine diesel engines, the metal salts of this invention may be present in amounts of up to 30% by weight, or more, of the total weight of the lubricating composition.

The invention also contemplates the use of other additives in combination with the compositions of this invention. Such additives include, for example, detergents and dispersants of the ash-producing or ashless type, corrosion- and oxidation-inhibiting agents, pour point depressing agents, extreme pressure agents, antiwear agents, color stabilizers and anti-foam agents.

Many of the above-mentioned extreme pressure agents and corrosion oxidation inhibitors also serve as antiwear agents. Zinc dialkylphosphorodithioates are a well known example.

Pour point depressants are a particularly useful type of additive often included in the lubricating oils described herein. The use of such pour point depressants in oil-based compositions to improve low temperature properties of oil-based compositions is well known in the art. See, for example, page 8 of "Lubricant Additives" by C.V. Smalheer and R. Kennedy Smith (Lezius-Hiles Co., publishers, Cleveland, Ohio, 1967).

Examples of useful pour point depressants are polymethyacrylates, polyacrylates; polyacrylamides; condensation products of haloparaffin waxes and aromatic compounds; vinyl carboxylate polymers; and terpolymers of dialkylfumarates, vinylesters of fatty acids and alkylvinylethers. Pour point depressants useful for the purpose of this invention, techniques for their preparation and their uses are described in U.S. Patents 2,387,501; 2,015,748; 2,655,479; 1,815,022; 2,191,498; 2,666,746; 2,721,877; 2,721,878 and 3,250,715.

Anti-foam agents are used to reduce or prevent the formation of stable foam. Typical anti-foam agents include silicones or organic polymers. Additional anti-foam compositions are described in "Foam Control Agents", by Henry T. Kerner (Noyes Data Corporation, 1976), pages 125-162.

The compositions of this invention can be added directly to the fuels or lubricants. Preferably, however, the are diluted with a substantially inert, normally liquid organic diluent such as mineral oil, naphtha, benzene, toluene or xylene, to form an additive concentrate. These concentrates usually contain from 10% to 80% by weight of the composition of this invention, and 20% to 90% by weight of the inert diluents. The concentrates also may contain one or more other additives known in the art or described hereinabove.

The fuel compositions of the present invention contain a major proportion of a normally liquid fuel, usually a hydrocarbonaceous petroleum distillate fuel such as motor gasoline as defined by ASTM Specification D439 and diesel fuel or fuel oil as defined by ASTM Specification D396. Normally liquid fuel compositions comprising non-hydrocarbonaceous materials such as alcohols, ethers, organo-nitro compounds and the like (e.g., methanol, ethanol, diethyl ether, methyl ether ether, nitromethane) are also within the scope of this invention as are liquid fuels which are mixtures of one or more hydrocarbonaceous fuels and one or more non-hydrocarbonaceous materials are also contemplated. Examples of such mixtures are combinations of gasoline and ethanol and of diesel fuel and ether. Particularly preferred is gasoline, that is, a mixture of hydrocarbons having an ASTM distillation range from 60°C at the 10% distillation point to 205°C at the 90% distillation point.

Generally, these fuel compositions contain an amount of the fuel additive of this invention sufficient to improve one or more properties of the fuel such as rust-inhibition, dispersancy; usually this amount is 0.005% to 0.5% by volume, preferably 0.01% to 0.1% by volume, based on the volume of such fuel compositions.

The fuel compositions can contain, in addition to the fuel additive compositions of this invention, other additives which are well known to those of skill in the art. These include antiknock agents such as tetraalkyl lead compounds, lead scavengers such as haloalkanes (e.g., ethylene dichloride and ethylene dibromide), deposit preventers or modifiers such as triaryl phosphates, dyes, cetane improvers, antioxidants such as 2,6-di-tertiary-butyl-4-methylphenol, rust inhibitors such as alkylated succinic acids and anhydrides, bacteriostatic agents, gum inhibitors, metal deactivators, demulsifiers, upper cylinder lubricants and anti-icing agents.

The fuel additive compositions of this invention can be added directly to the fuel, or they can be diluted with a substantially inert, normally liquid organic diluent such as naphtha, benzene, toluene, xylene or a normally liquid fuel as described above, to form an additive concentrate. These concentrates generally contain from 20% to 90% by weight of the composition of this invention and may contain, in addition one or more other conventional additives known in the art or described hereinabove.

The fuel additive compositions of this invention can be provided in concentrate form with less than the above-indicated levels of additives, and then be added directly to the fuel along with additional amounts of the compositions of this invention and other known additives, or be further diluted with additives prior to the addition to the fuel until the level of additives is at the desired level.

## Claims

1. A process for the preparation of an extended polyamine which comprises reacting, in the presence of an acid catalyst:
(A) a reactant represented by formula (II), (X), or (XI): 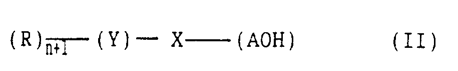
HO―(R_{A}O)ₚ―R_{B}―OR_{C} (X)
S_{f} (R_{f} OH)_{2f} (XI)
wherein each R is hydrogen or hydrocarbyl; Y represents a nitrogen, oxygen or sulfur atom; X is an alkylene group further substituted by one or two AOH groups; A is hydrocarbylene; n is 1 when Y is nitrogen and n is 0 when Y is oxygen or sulfur; R_{A} and R_{B} are C₂₋₈ alkylene; R_{C} is aryl, C₁₋₇ alkyl or aralkyl; p is 0 to 150; f is 1 or 2; and R_{f} is C₁₋₁₀ alkylene, alkylene oxoalkylene having 1-10 C-atoms in each alkylene, or arylene containing at least 6 C-atoms; and
(B) a reactant represented by formula (III), (IV), (VII) or (VIII): 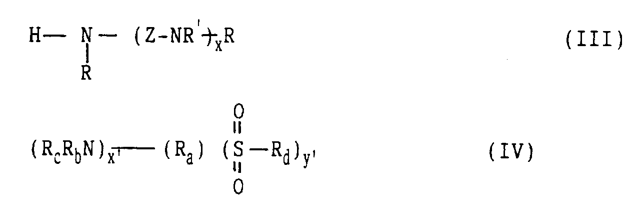
NH₂ - Alkylene―(O-Alkylene)_{m'} - NH₂ (VII) 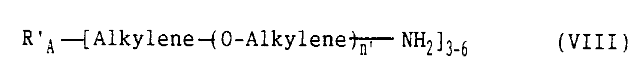
wherein each R is hydrogen or hydrocarbyl; each R' is hydrogen, alkyl or NH₂R''(NHR'')_{y} wherein each R'' is an alkylene group having from 1 to 10 carbon atoms and y is a number in the range from 1 to 6; each Z is an alkylene group having from 1 to 10 carbon atoms, a heterocyclic nitrogen-containing cycloalkylene, or an oxyalkylene group having from 1 to 10 carbon atoms; and x is a number in the range from 1 to 10; said reactant of formula (III) being free from acetylenic unsaturation; R_{d} is -NH₂, alkali or alkaline earth metal, Rₐ is a polyvalent organic radical having a valence equal to x' + y'; R_{b} and R_{c} are each independently hydrogen, or hydrocarbyl, with the proviso that at least one of R_{b} or R_{c} is hydrogen per aminosulfonic acid molecule; and x' and y' are each integers equal to or greater than one; m' is from 3 to 70; n' is from 1 to 40 with the proviso that the sum of all n's is from 3 to 70 and R'_{A} is a polyvalent saturated hydrocarbon radical of up to 10 carbon atoms having a valence of 3 to 6.

2. A process according to claim 1 wherein reactant (A) is a polyhydric alcohol having three or four hydroxy groups, or an amino alcohol and reactant (B) comprises an alkylene polyamine having at least two primary nitrogen atoms and wherein the alkylene group contains two to ten carbon atoms.

3. A process according to claim 1 or claim 2 wherein A of formula (II) of reactant (A) represents an alkylene group containing two to seven carbon atoms.

4. A process according to any preceding claim wherein reactant (A) is glycerol, trimethylolethane, trimethylolpropane, or tris(hydoxymethyl)aminomethane.

5. A process according to any preceding claim wherein polyamine reactant (B) is an alkylene polyamine selected from triethylenetetramine, tetraethylenepentamine, pentaethylenehexamine and mixtures thereof.

6. A process according to any preceding claim wherein the acid catalyst is phosphoric acid, an organophosphorus acid, an alkali or alkaline earth metal partial salt of H₃PO₄, or triphenylphosphite.

7. A basic dispersant for a lubricant or fuel composition, having no free amine, of the formula:
(QTₜ)ᵥJⱼ
wherein Q is a radical of a molecule selected from hydrocarbyl-substituted carboxylic acids, or hydrocarbyl phenols wherein the hydrocarbyl substituents may themselves be substituted by nitro, amino, halo, C₁₋₇ alkoxy, C₁₋₇ alkyl mercapto, oxo, thio, or -NH, -O- or -S-interrupting groups such that any non-carbon atoms do not account for more than 10% of the total weight of the hydrocarbyl substituent; T is acyl, acyloxy, oxyalkylene, arylene or imidoyl; J is a condensed polyamine radical derived from an extended polyamine prepared in accordance with a process of any preceding claim; and t, v and j each represent a whole integer of at least 1.

8. A dispersant as defined in claim 7 wherein Q is derived from a polyalkylene-substituted succinic acid or derivative thereof wherein said polyalkylene substituent is characterised by a Mn value of 150 to 5,000 and a Mw/Mn value of 1.5 to 4.0.

9. A basic high molecular weight additive/dispersant for a lubricant or fuel composition characterised in that the additive/dispersant is derived from:
I. at least one reactant selected from
A. hydrocarbyl-substituted carboxylic acids or derivatives thereof containing at least 34 carbon atoms, or
B. alkylphenols in which the alkyl group contains at least 30 carbon atoms; with
II. at least one extended polyamine reactant prepared according to the process of any one of claims 1 to 6.

10. An additive/dispersant of claim 9 wherein said reactant I is at least one substituted succinic acid or derivative thereof consisting of substituent groups and succinic groups wherein the substituent groups are derived from polyalkylene, said polyalkylene being characterised by a Mn value of 1300 to 5000 and a Mw/Mn value of 1.5 to 4.0; and said extended polyamine reactant II is derived from the reaction of (A) glycerol, trimethylolpropane, trimethylolethane or tris(hydroxymethyl) aminomethane, and (B) triethylenetetramine, diethylenetriamine, tetraethylene pentamine, pentaethylenehexamine and mixtures thereof.

11. An additive dispersant according to either of claims 9 and 10 wherein the polyamine is prepared by reacting (A) tris(hydroxymethyl)aminomethane, and (B) tetraethylene pentamine.

12. An additive dispersant according to any one of claims 9 to 11 which exhibits a total base number of from 55 to 85.

13. An additive/dispersant according to any one of claims 9 to 12 containing no free amine.

14. A lubricating composition comprising a major amount of an oil of lubricating viscosity and a minor amount of at least one extended polyamine prepared in accordance with a process of any one of claims 1-6, or at least one additive/dispersant as defined in any one of claims 7 to 13.

15. A composition according to claim 14 wherein the additive/dispersant is present in an amount of 0.1 to 10% by weight.

16. A concentrate for formulating lubricating compositions comprising from 20% to 90% by weight of a normally liquid, substantially inert organic solvent/diluent and from 10% to 80% by weight of at least one extended polyamine prepared in accordance with a process of any one of claims 1-6 or at least one additive/dispersant as defined in any one of claims 7-13.

17. A fuel composition comprising a major amount of a fuel and a minor amount of extended polyamine prepared in accordance with a process of any one of claims 1-6, or at least one additive/dispersant as defined in any one of claims 7-13.

18. A composition according to claim 17 wherein the additive/dispersant is present in an amount of from 0.01 to 0.1% by volume.

19. A method for lubricating an internal combustion engine which method comprises adding to the engine a lubricant composition as claimed in either of claims 14 and 15.

## Patentansprüche

1. Verfahren zur Herstellung eines verlängerten Polyamins, dadurch gekennzeichnet, daß man in Gegenwart eines sauren Katalysators
(A) einen Reaktant der allgemeinen Formel (II), (X) oder (XI) 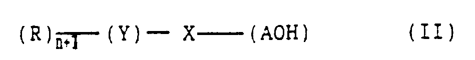
HO― (R_{A}O)ₚ―R_{B}―OR_{C} (X)
S_{f} (R_{f} OH)_{2f} (XI)
in der jeder Rest R ein Wasserstoffatom oder ein Hydrocarbylrest ist, Y ein Stickstoff-, Sauerstoff- oder Schwefelatom bedeutet, X ein Alkylenrest ist, der durch einen oder zwei Reste AOH weiter substituiert ist, A ein Hydrocarbylenrest ist, n den Wert 1 hat, wenn Y ein Stickstoffatom ist, und n den Wert 0 hat, wenn Y ein Sauerstoff- oder Schwefelatom ist, der Rest R_{A} und R_{B} C₂₋₈-Alkylenreste bedeuten, der Rest R_{C} ein Aryl-, C₁₋₇-Alkyl- oder Aralkylrest ist, p einen Wert von 0 bis 150 hat, f den Wert 1 oder 2 hat, und der Rest R_{f} ein C₁₋₁₀-Alkylenrest, ein Alkylenoxoalkylenrest mit 1 bis 10 Kohlenstoffatomen in jedem Alkylenrest oder ein Arylenrest mit mindestens 6 Kohlenstoffatomen ist, mit
(B) einem Reaktanten der allgemeinen Formel (III), (IV), (VII) oder (VIII) 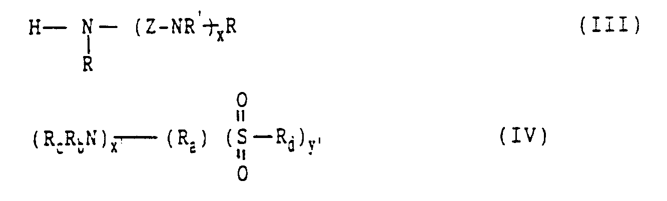
NH₂ - Alkylen ―(O-Alkylen )_{m'} - NH₂ (VII) 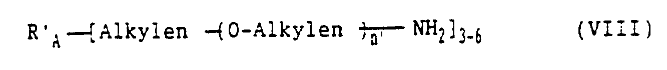
in der jeder Rest R ein Wasserstoffatom oder Hydrocarbylrest ist, jeder Rest R' ein Wasserstoffatom, ein Alkylrest oder ein Rest der allgemeinen Formel NH₂R''(NHR'')_{y} ist, wobei jeder Rest R'' ein Alkylenrest mit 1 bis 10 Kohlenstoffatomen ist und y eine Zahl im Bereich von 1 bis 6 ist, jeder Rest Z ein Alkylenrest mit 1 bis 10 Kohlenstoffatomen, ein heterocyclischer Stickstoff enthaltender Cycloalkylenrest oder ein Oxyalkylenrest mit 1 bis 10 Kohlenstoffatomen ist und x eine Zahl im Bereich von 1 bis 10 ist, wobei der Reaktant der allgemeinen Formel (III) keine acetylenische Dreifachbindung enthält, der Rest R_{d} eine Aminogruppe, ein Alkali- oder Erdalkalimetall, der Rest Rₐ ein mehrwertiger organischer Rest mit einer Wertigkeit gleich x' + y' ist, die Reste R_{b} und R_{c} jeweils unabhängig Wasserstoffatome oder Hydrocarbylreste bedeuten, mit der Maßgabe, daß mindestens einer der Reste R_{b} oder R_{c} ein Wasserstoffatom pro Aminosulfonsäuremolekül ist, und x' und y' jeweils ganze Zahlen gleich oder größer als 1 sind, m' einen Wert von 3 bis 70 hat, n' einen Wert von 1 bis 40 hat, mit der Maßgabe, daß die Summe sämtlicher n' einen Wert von 3 bis 70 hat, und der Rest R'_{A} ein mehrwertiger gesättigter Kohlenwasserstoffrest mit bis zu 10 Kohlenstoffatomen und mit einer Wertigkeit von 3 bis 6 ist.

2. Verfahren nach Anspruch 1, wobei der Reaktant (A) ein mehrwertiger Alkohol mit 3 oder 4 Hydroxylgruppen oder ein Aminoalkohol ist und der Reaktant (B) ein Alkylenpolyamin mit mindestens 2 primären Stickstoffatomen umfaßt und wobei der Alkylenrest 2 bis 10 Kohlenstoffatome enthält.

3. Verfahren nach Anspruch 1 oder 2, wobei A in der allgemeinen Formel (II) einen Alkylenrest mit 2 bis 7 Kohlenstoffatomen bedeutet.

4. Verfahren nach einem der Ansprüche 1 bis 3, wobei der Reaktant (A) Glycerin, Trimethylolethan, Trimethylolpropan oder Tris-(hydroxymethyl)aminomethan ist.

5. Verfahren nach einem der Ansprüche 1 bis 4, wobei der Polyaminreaktant (B) ein Alkylenpolyamin ausgewählt aus Triethylentetramin, Tetraethylenpentamin, Pentaethylenhexamin und deren Gemischen ist.

6. Verfahren nach einem der Ansprüche 1 bis 5, wobei der saure Katalysator Phosphorsäure, eine Organophophorsäure, ein Alkali- oder Erdalkalimetallpartialsalz von H₃PO₄ oder Triphenylphosphit ist.

7. Ein basisches Dispersant für ein Schmiermittel oder eine Brennstoff- oder Treibstoffzusammensetzung, das kein freies Amin hat, der allgemeinen Formel
(QTₜ)ᵥJⱼ
wobei Q der Rest eines Moleküls ausgewählt aus Hydrocarbyl-substituierten Carbonsäuren oder Hydrocarbylphenolen ist, wobei die Hydrocarbyl-Substituenten ihrerseits durch Nitrogruppen, Aminogruppen, Halogenatome, C₁₋₇-Alkoxyreste, C₁₋₇-Alkylmercaptoreste, Oxogruppen, Thiogruppen oder -NH-Gruppen, -O- oder -S- Brückengruppen substituiert sein können, so daß keines der Nicht-Kohlenstoffatome mehr als 10% des Gesamtgewichts des Hydrocarbyl-Substituenten ausmacht, T ein Acyl-, Acyloxy-, Oxyalkylen-, Arylen- oder Imidoylrest ist, J ein kondensierter Polyaminrest ist, der sich von einem gemäß Anspruch 1 bis 6 hergestellten verlängerten Polyamin ableitet, und t, v und j jeweils eine ganze Zahl mit einem Wert von mindestens 1 bedeuten.

8. Ein Dispersant gemäß Anspruch 7, wobei Q sich ableitet von einer Polyalkylen-substituierten Bernsteinsäure oder deren Derivat, wobei der Polyalkylen-Substituent einen Mn-Wert von 150 bis 5000 und einen Mw/Mn-Wert von 1,5 bis 4,0 hat.

9. Ein basisches hochmolekulares Additiv/Dispersant für ein Schmiermittel oder eine Brennstoff- oder Treibstoffzusammensetzung, dadurch gekennzeichnet, daß das Additiv/Dispersant sich ableitet von
I. mindestens einem Reaktanten ausgewählt aus
A. Hydrocarbyl-substituierten Carbonsäuren oder deren Derivaten mit mindestens 34 Kohlenstoffatomen oder
B. Alkylphenolen mit mindestens 30 Kohlenstoffatomen im Alkylrest, mit
II. mindestens einem verlängerten Polyaminreaktant, hergestellt gemäß dem Verfahren nach einem der Ansprüche 1 bis 6.

10. Ein Additiv/Dispersant nach Anspruch 9, wobei der Reaktant I mindestens eine substituierte Bernsteinsäure oder deren Derivat ist, die aus Substituenten-Gruppen und Bernsteinsäure-Gruppen besteht, wobei die Substituenten-Gruppen sich ableiten von einem Polyalkylen, und das Polyalkylen einen Mn-Wert von 1300 bis 5000 und einen Mw/Mn-Wert von 1,5 bis 4,0 hat, und der verlängerte Polyamin-Reaktant II sich ableitet von der Umsetzung von (A) Glycerin, Trimethylolpropan, Trimethylolethan oder Tris-(hydroxymethyl)-aminomethan mit (B) Triethylentetramin, Diethylentriamin, Tetraethylenpentamin, Pentaethylenhexamin und deren Gemischen.

11. Ein Additiv/Dispersant nach einem der Ansprüche 9 und 10, wobei das Polyamin hergestellt wird durch Umsetzung von (A) Tris-(hydroxymethyl)aminomethan mit (B) Tetraethylenpentamin.

12. Ein Additiv/Dispersant nach einem der Ansprüche 9 bis 11, mit einer Gesamtbasenzahl von 55 bis 85.

13. Ein Additiv/Dispersant nach einem der Ansprüche 9 bis 12, das kein freies Amin enthält.

14. Eine Schmiermittelzusammensetzung, umfassend einen größeren Anteil eines Öls mit Schmierviskosität und einen kleineren Anteil mindestens eines verlängerten Polyamins, hergestellt nach einem Verfahren nach einem der Ansprüche 1 bis 6, oder mindestens einem Additiv/Dispersant gemäß einem der Ansprüche 7 bis 13.

15. Zusammensetzung nach Anspruch 14, wobei das Additiv/Dispersant in einer Menge von 0,1 bis 10 Gew.-% vorliegt.

16. Konzentrat zur Herstellung von Schmiermittelzusammensetzungen, umfassend 20 bis 90 Gew.-% eines normalerweise flüssigen, praktisch inerten organischen Lösungsmittels/Verdünnungsmittels und 10 bis 80 Gew.-% mindestens eines verlängerten Polyamins, hergestellt gemäß einem Verfahren nach einem der Ansprüche 1 bis 6, oder mindestens eines Additiv/Dispersants gemäß einem der Ansprüche 7 bis 13.

17. Brennstoff- bzw. Treibstoffzusammensetzung, umfassend einen größeren Anteil eines Brennstoffs bzw. Treibstoffs und einen kleineren Anteil eines verlängerten Polyamins, hergestellt nach einem Verfahren nach einem der Ansprüche 1 bis 6, oder mindestens eines Additiv/Dispersants gemäß einem der Ansprüche 7 bis 13.

18. Eine Zusammensetzung nach Anspruch 17, wobei das Additiv/Dispersant in einer Menge von 0,01 bis 0,1 Vol.-% vorliegt.

19. Verfahren zum Schmieren von Verbrennungsmotoren, dadurch gekennzeichnet, daß man den Motor mit einer Schmiermittelzusammensetzung nach Anspruch 14 oder 15 versetzt.

## Revendications

1. Un procédé pour la préparation d'une polyamine étendue, selon lequel on fait réagir, en présence d'un catalyseur acide;
(A) un réactif représenté par les formules (II), (X), ou (XI): 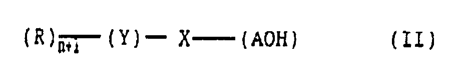
HO―(R_{A}O)ₚ―R_{B}―OR_{C} (X)
S_{f} (R_{f} OH)_{2f} (XI)
dans lesquelles chaque R est de l'hydrogène ou un hydrocarbyle; Y représente un atome d'azote, d'oxygène ou de soufre; X est un groupe alkylène substitué en outre par un groupe ou deux groupes AOH; A est de l'hydrocarbylène; n est 1 lorsque Y est de l'azote et n est 0 lorsque Y est de l'oxygène ou du soufre, R_{A} et R_{B} sont un alkylène en C₂ à C₈, R_{C} est de l'aryle, un alkyle en C₁ à C₇ ou un aralkyle; p est de 0 à 150; f est 1 ou 2; et R_{f} est un alkylène en C₁ à C₁₀, un alkylène-oxoalkylène ayant de 1 à 10 atomes de carbone dans chaque alkylène, ou bien un arylène renfermant au moins 6 atomes de carbone; et
(B) un réactif représenté par les formules (III), (IV), (VII) ou (VIII): 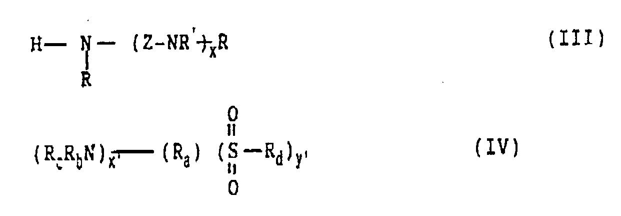
NH₂ - Alkylene―(O-Alkylene)_{m'} - NH₂ (VII) 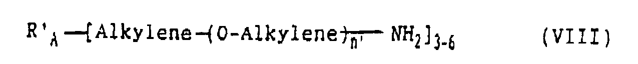
dans lesquelles chaque R est de l'hydrogène ou un hydrocarbyle; chaque R' est de l'hydrogène, un alkyle ou NH₂R'' (NHR'')_{y}, où chaque R'' est un groupe alkylène ayant de 1 à 10 atomes de carbone et y est un noire dans la gamme de 1 à 6, chaque Z est un groupe alkylène ayant de 1 à 10 atomes de carbone, un cycloalkylène hétérocyclique renfermant de l'azote ou bien un groupe oxyalkylène ayant de 1 à 10 atomes de carbone; et x est un nombre dans la gamme de 1 à 10; ledit réactif de formule (III) étant exempt d'insaturation acétylénique; R_{d} est -NH₂, un métal alcalin ou un métal alcalino-terreux, Rₐ est un radical polyvalent organique présentant une valence égale à x' + y'; R_{b} et R_{c} représentent' chacun, de façon indépendante, de l'hydrogène ou un hydrocarbyle, sous la condition qu'au moins un des R_{b} ou R_{c} soit de l'hydrogène par molécule d'acide aminosulfonique: et x' et y' représentent chacun des nombres entiers égaux à ou supérieurs à 1; m' est de 3 à 70; n' est de 1 à 40 sous la condition que la somme de tous les n' soit de 3 à 70 et R'_{A} est un radical hydrocarbone polyvalent saturé allant jusqu'à 10 atomes de carbone, présentant une valence de 3 à 6.

2. Un procédé selon la revendication 1, dans lequel le réactif (A) est un alcool polyhydrique ayant trois ou quatre groupes hydroxy, ou bien un alcool aminé et le réactif (B) comporte une alkylène polyamine ayant au moins deux atomes d'azote primaire et dans lequel le groupe alkylène renferme de 2 à 10 atomes de carbone.

3. Un procédé selon la revendication 1 ou la revendication 2, dans lequel A dans la formule (II) du réactif (A) représente un groupe alkylène renfermant de 2 à 7 atomes de carbone.

4. Un procédé selon l'une quelconque des revendications précédentes, dans lequel le réactif (A) est du glycérol, du triméthyloléthane, du triméthylpropane ou du tris(hydroxyméthyl)aminométhane.

5. Un procédé selon l'une quelconque des revendications précédentes, dans lequel le réactif de type polyamine (B) est une alkylène polyamine choisie parmi la triéthylènetétramine, la tétraéthylènepentamine, la pentaéthylènehexamine et des mélanges de celles-ci.

6. Un procédé selon l'une quelconque des revendications précédentes, dans lequel le catalyseur acide est de l'acide phosphorique, un acide organo-phosporé, un sel partiel de métal alcalin ou de métal alcalino-terreux de H₃PO₄, ou un triphénylphosphite.

7. Un dispersant basique pour une composition lubrifiante ou de carburant, ne présentant aucune amine libre, de la formule :
(QTₜ)ᵥJⱼ
dans laquelle Q est un radical d'une molécule choisie parmi les acides carboxyliques à substitution hydrocarbyle, ou bien les phénols hydrocarbylés dans lesquels les substituants hydrocarbyle peuvent être eux-mêmes substitués par des groupes d'interruption nitro, amino, halo, alcoxy en C₁ à C₇, alkyl-mercapto en C₁ à C₇, oxo, thio, ou -NH, -O- ou -S-, pour autant que des atomes, qui ne sont pas des carbones n'entrent pas en compte pour plus de 10% du poids total du substituant de type hydrocarbyle; T est un acyle, un acyloxy, un oxyalkylène, un arylène ou un imidoyle; J est un radical de type polyamine condensée, dérivée d'une polyamine étendue préparée selon le procédé de l'une quelconque des revendications précédentes: et t, v et j représentent chacun un nombre entier d'au moins 1.

8. Un agent dispersant tel que défini dans la revendication 7 dans lequel Q est dérivé d'un acide succinique à substitution polyalkylène ou d'un dérivé de celui-ci, dans lequel ledit substituant de type polyalkylène est caractérisé par une valeur du poids moléculaire moyen en nombre (Mn) de 150 à 5 000 et un rapport entre le poids moléculaire moyen en poids et le poids moléculaire moyen en nombre (Mw/Mn) de 1,5 à 4,0.

9. Un agent dispersant/additif basique de poids moléculaire élevé destiné à une composition lubrifiante ou de carburant, caractérisé en ce que l'agent dispersant/additif est dérivé de :
I. au moins un réactif choisi parmi
A. les acides carboxyliques à substitution hydrocarbyle ou leurs dérivés renfermant au moins 34 atomes de carbone; ou bien
B. des alkylphénols dans lesquels le groupe alkyle renferme au moins 30 atomes de carbone; avec
II. au moins un réactif du type polyamine étendue, préparé selon le procédé de l'une quelconque des revendications 1 à 6.

10. Un agent dispersant/additif de la revendication 9, dans lequel ledit réactif I est au moins un acide succinique substitué ou un dérivé de celui-ci, comportant des groupes substituants et des groupes succiniques dans lesquels les groupes substituants sont dérivés d'un polyalkylène, ledit polyalkylène étant caractérisé par une valeur Mn de 1300 à 5000 et un rapport Mw/Mn de 1,5 à 4,0; et ledit réactif II du type polyamine étendue est dérivé de la réaction de (A) du glycérol, du triméthylolpropane, du triméthyloléthane ou du tris(hydroxyméthyl) aminométhane, et (B) la triéthylènetétramine, la diéthylènetriamine, la tétraéthylènepentamine, la pentaéthylènehexamine et des mélanges de ceux-ci.

11. Un agent dispersant/additif selon l'une quelconque des revendications 9 et 10, dans lequel la polyamine est préparée en faisant réagir (A) du tris(hydroxyméthyl) aminométhane, et (B) la tétraéthylènepentamine.

12. Un agent dispersant/additif selon l'une quelconque des revendications 9 à 11, qui présente un indice de base total de 55 à 85.

13. Un agent dispersant/additif selon l'une quelconque des revendications 9 à 12, qui ne renferme pas d'amine libre.

14. Une composition lubrifiante comportant une quantité prépondérante d'huile de viscosité lubrifiante et une quantité plus faible d'au moins une polyamide étendue préparée selon le procédé de l'une quelconque des revendications 1 à 6, ou au moins un agent dispersant/additif tel que défini dans l'une quelconque des revendications 7 à 13.

15. Une composition selon la revendication 14, dans laquelle l'agent dispersant/additif est présent en une quantité de 0,1 à 10% en poids.

16. Un concentré destiné à la formulation de compositions lubrifiantes, comportant de 20% à 90% en poids d'un agent diluant/solvant organique pratiquement inerte et liquide dans les conditions normales et de 10 à 80% en poids d'au moins une polyamine étendue préparée selon un procédé de l'une quelconque des revendications 1 à 6 ou au moins un agent dispersant/additif tel que défini dans l'une quelconque des revendications 7 à 13.

17. Une composition de carburant comportant une quantité prépondérante d'un carburant et une quantité plus faible d'une polyamine étendue, préparée selon un procédé de l'une quelconque des revendications 1 à 6, ou bien au moins un agent dispersant/additif tel que défini dans l'une quelconque des revendications 7 à 13.

18. Une composition selon la revendication 17, dans laquelle l'agent dispersant/additif est présent en une quantité de 0,01 à 0,1% en volume.

19. Un procédé pour lubrifier un moteur à combustion interne, ce procédé consistant à ajouter au moteur une composition lubrifiante telle que revendiquée dans l'une quelconque des revendications 14 et 15.
